# EUROPÄISCHE PATENTANMELDUNG

(11) **EP 1 083 421 A2**
(43) Veröffentlichungstag der Anmeldung: **14.03.2001**
(21) Anmeldenummer: 00115169.5
(22) Anmeldetag: 13.07.2000
(51) Int. Cl.: G01M 17/007

(54) **Anordnung zur Identifizierung von Kraftfahrzeugen bei der Untersuchung in einer Prüfstrasse für Kraftfahrzeuge**

(30) Priorität: 08.09.1999 DE 19942844
(71) Anmelder: ROBERT BOSCH GMBH, 70442 Stuttgart (DE)
(72) Erfinder: Fischer, Uwe, 71409 Schwaikheim (DE)

(57) **Zusammenfassung**

Die Erfindung beschreibt eine Anordnung zur Identifizierung von Kraftfahrzeugen bei der Untersuchung in einer Prüfstraße oder dergleichen für Kraftfahrzeuge. Diese Prüfstraße enthält eine Vielzahl von Prüfgeräten in einzelnen Prüfstationen, die an eine Datenverarbeitungsanlage angeschlossen sind. Es ist eine Identifizierung des Kraftfahrzeugs vor, während und nach der Prüfung vorgesehen. Erfindungsgemäß wird zur Identifizierung in der Prüfstraße das Kraftfahrzeug mit einem Kraftfahrzeug-eigenen Kennzeichen versehen, welches zu Beginn der Prüfung dem Kraftfahrzeug zugeordnet wird. Dieses Kraftfahrzeug-eigene Kennzeichen, sei es in Form des amtlichen Kennzeichens bzw. Nummernschilds, sei es in Form eines Strichcodes, wird in jeder Prüfstation bzw. an jedem Prüfgerät von einer Kamera oder einem anderen geeigneten Erkennungsmittel, z.B. einem Strichcodelesegerät, automatisch gelesen und von der damit verbundenen Datenverarbeitungsanlage identifiziert. Nach erfolgter Identifizierung wird die angefahrene Prüfstation automatisch von der Datenverarbeitungsanlage auf das für das entsprechende, identifizierte Kraftfahrzeug vorgesehene Prüfprogramm eingestellt und diese führt dies dann durch.

## Beschreibung

### Stand der Technik

Die Erfindung geht aus von einer Anordnung zur Identifizierung von Kraftfahrzeugen bei der Untersuchung in einer Prüfstraße für Kraftfahrzeuge der im Oberbegriff des Anspruchs 1 definierten Gattung.

In einer Prüfstraße für Kraftfahrzeuge sind üblicherweise eine Vielzahl von Prüfgeräten vorgesehen, wie beispielsweise Bremsenprüfung, Stoßdämpferprüfung und Spurprüfung. Es können auch eine Wiegeeinrichtung, ein Tachometerprüfstand und Geräte zur Einstellung der Scheinwerfer vorgesehen sein, wie auch Bremsflüssigkeitsprüfgeräte, Schallpegelmessgeräte, Abgastester und Dieselrauchgastester. Da in einer Prüfeinrichtung oder in einer Werkstatt mehrere Prüfer mit unterschiedlichen Fahrzeugen in der Prüfstraße arbeiten, besteht die Notwendigkeit der eindeutigen Identifizierung, insbesondere der Fahrzeuge in jeder Prüfstation, damit die dort ermittelten Ergebnisse eindeutig dem jeweiligen Fahrzeug zugeordnet werden können.

In der DE 38 74 464 T2 (Übersetzung der EP 0 306 362 B1) ist ein System zum Erfassen und Bearbeiten von Daten für die Prüfung von Kraftfahrzeugen beschrieben, bei welchem die Identifizierung durch dem Fahrzeug zu Beginn der Prüfung zuordneten Fernsteuergeräten erfolgt, die mit einer Tastatur ausgerüstet sind. Der im Fahrzeug sitzende Prüfer kann darüber hinaus beim Anfahren der verschiedenen Prüfstationen entsprechend der jeweiligen Anzeige das auszuwählende Prüfprogramm aktivieren. Die einzelnen Prüfstationen sind mit einer Datenverarbeitungsanlage verbunden, damit die ermittelten Daten den geprüften Fahrzeugen richtig zugeordnet werden. Darüber hinaus sind die an jeder Station vorhandenen Empfänger für die Signale der Fernbedienungen mit der Datenverarbeitungszentrale verbunden. Welche Prüfungen in den Stationen durchgeführt werden müssen, ist jeweils von dem im Fahrzeug mitfahrenden Prüfer an den einzelnen Stationen separat einzustellen. Dies erfordert die genaue Kenntnis des jeweiligen Prüfprogramms beim jeweiligen Fahrzeug und ist daher zeitaufwendig und fehlerbehaftet.

Eine weitere Möglichkeit zur Identifizierung von Fahrzeugen in einem Prüfstraßensystem ist aus der DE 196 15 008 A1 bekannt. Dabei wird am Anfang des Prüfsystems jedem Fahrzeug eine eindeutige Fahrzeugidentifikation zugeordnet, die durch das Einspeichern einer Nummer auf einer Chipkarte erfolgt. Diese Chipkarte wird dann von dem Prüfer zu jeder Prüfstation mitgenommen und dort mittels eines Chipkartenlesers eingegeben. Daraufhin wird die erforderliche Prüfung durchgeführt und das Ergebnis angezeigt bzw. an die zentrale Datenverarbeitungsanlage weitergegeben, wo sie dem Fahrzeug zugeordnet wird. Auch hier wird jeweils von dem mitfahrenden Prüfer in jeder Prüfstation eine separate Identifizierung des Fahrzeugs an der Prüfstation vorgenommen und daraufhin von der zentralen Datenverarbeitungsanlage das entsprechende Prüfprotokoll in die Arbeitstation gegeben. Auch hier ist wiederum die Notwendigkeit gegeben, dass die im Fahrzeug sitzende Person, der Prüfer, an jeder Arbeitsstation die dem Fahrzeug zugeordnete Chipkarte in den Chipkartenleser einstecken muss. Auch dies sind Quellen für mögliche Verwechslungen, neben der Tatsache, dass es zeitaufwendig ist.

Aufgabe vorliegender Erfindung ist es, eine eindeutige und automatische Fahrzeugidentifizierung in jeder Station, die vom Fahrzeug angefahren wird, vorzunehmen und dann eine rasche und eindeutige dem Fahrzeug entsprechende Prüfung in jeder Station durchführen zu können.

### Vorteile der Erfindung

Die erfindungsgemäße Anordnung zur Identifizierung von Kraftfahrzeugen bei der Untersuchung in einer Prüfstraße für Kraftfahrzeuge mit den kennzeichnenden Merkmalen des Anspruchs 1 hat gegenüber dem bekannten Stand der Technik den Vorteil, dass das Fahrzeug in jeder einzelnen Prüfstation automatisch und selbsttätig erkannt wird und dass dementsprechend von der zentralen Datenverarbeitungsanlage die Prüfstation mit dem für das identifizierte Fahrzeug vorgesehene Prüfprogramm an dieser angefahrenen Prüfstation aktiviert und dann durchgeführt wird. Dadurch ist eine individuell auf das Fahrzeug abgestimmte Prüfung in jeder Prüfstation in schneller Weise durchführbar.

Dies wird gemäß der Erfindung prinzipiell dadurch erreicht, dass das Kraftfahrzeug temporär zur Identifizierung in der Prüfstraße mit einem Kraftfahrzeug-eigenen Kennzeichen versehen ist, welches zu Beginn der Prüfung dem Kraftfahrzeug zugeordnet wird, dieses Kraftfahrzeug-eigene Kennzeichen in jeder Prüfstation von einer Kamera oder einem anderen geeigneten Erkennungsmittel automatisch gelesen und von der damit verbundenen Datenverarbeitungsanlage identifiziert wird und nach erfolgter Identifizierung die angefahrene Prüfstation automatisch von der Datenverarbeitungsanlage auf das für das entsprechende, identifizierte Kraftfahrzeug vorgesehene Prüfprograrmm eingestellt wird und die Prüfstation dieses dann durchführt.

Durch die in den weiteren Ansprüchen niedergelegten Maßnahmen sind vorteilhafte Weiterbildungen und Verbesserungen der im Anspruch 1 angegebenen Anordnung möglich.

Entsprechend einer besonders vorteilhaften Weiterbildung der erfindungsgemäßen Anordnung ist als das zur Identifizierung vorgesehene Kraftfahrzeug-eigene Kennzeichen ein am Kraftfahrzeug angebrachter Strichcode oder das amtliche Kennzeichen, das Nummernschild, vorgesehen. Damit sind in vorteilhafter Weise zwei Alternativen gegeben, von der die zweite, das Nummernschild, keine separate Ausgabe eines temporären Kennzeichens erfordert.

Gemäß einer vorteilhaften Ausgestaltung der Ausführungsform mit dem am Kraftfahrzeug angebrachten Strichcode ist vorgesehen, dass jeder Strichcode vor jeder Prüfung dem Kraftfahrzeug zugeordnet, erstellt und auf einem Träger aufgebracht wird und dann anschließend an dem betreffenden Kraftfahrzeug angebracht wird.

In weiterer Ausgestaltung dieser Möglichkeit, die für die Handhabung an einem Kraftfahrzeug sehr einfach ist, ist vorgesehen, dass der Strichcode auf einem magnetischen, flexiblen Trägerblatt aufgebracht ist, welches an geeigneter Stelle, insbesondere seitlich an einem Kotflügel oder an einer Tür des Kraftfahrzeugs, angebracht wird.

In vorteilhafter weiterer Ausgestaltung der Erfindung ist vorgesehen, dass als Kamera eine elektronische Kamera verwendet wird.

In weiterer vorteilhafter Ausbildung dieser Alternative des Kraftfahrzeug-eigenen Kennzeichens ist vorgesehen, dass das amtliche Kennzeichen, das Nummernschild also, softwaremäßig identifiziert und gegebenenfalls mit von früheren Prüfungen her bekanntem amtlichen Kennzeichen überprüft und korreliert wird.

Gemäß einer vorteilhaften Ausgestaltung der Erfindung ist ein Strichcodelesegerät zum Lesen und Erkennen des am Kraftfahrzeug angebrachten Strichcodes vorgesehen.

Die Erfindung wird nachfolgend anhand der Beschreibung von Ausführungsbeispielen näher erläutert.

### Beschreibung der Ausführungsbeispiele

Zur Identifizierung des Kraftfahrzeuges in einer Prüfstraße bzw. in den einzelnen Stationen einer Prüfstraße, was ganz generell auch innerhalb einer Werkstatt passieren kann und den dort vorhandenen Prüfgeräten, wird dem Kraftfahrzeug ein Kraftfahrzeug-eigenes Kennzeichen zugeordnet bzw. dieses mit ihm versehen. Entsprechend einer ersten Ausführungsform der Erfindung wird für diesen Zweck das amtliche Kennzeichen, das Nummernschild des Kraftfahrzeuges, verwendet. An jedem Prüfgerät wird das Kraftfahrzeug mit einer elektronischen Kamera erfasst und in der zugeordneten Datenverarbeitungsanlage wird mit Hilfe von Software in optischer Texterkennung das Nummernschild gelesen. Durch Korrelation des gelesenen amtlichen Kennzeichens mit unter Umständen im Datenverarbeitungssystem aus früheren Reparatur- oder Prüfaufträgen vorhandenen Kennzeichen, können eventuelle Lesefehler korrigiert werden.

Nach der Identifikation des Kraftfahrzeuges an dem einzelnen Prüfgerät wird dieses Prüfgerät nunmehr automatisch in die richtige Betriebsart geschaltet bzw. es wird von der zentralen Datenverarbeitungsanlage das für das betreffende, identifizierte Kraftfahrzeug richtige Prüfprogramm ausgewählt und aktiviert. Dieses Prüfprogramm wird dann von diesem bestimmten Prüfgerät, bei dem sich das Kraftfahrzeug gerade befindet, durchgeführt. Die Ergebnisse werden der zentralen Datenverarbeitung zur Auswertung und Zusammenführung mit eventuellen anderen Prüfergebnissen von anderen Prüfgeräten zugeführt. Ist das angefahrene Prüfgerät beispielsweise ein Bremsenprüfstand und das identifizierte Kraftfahrzeug ein solches mit Allradantrieb, dann wird automatisch von der zentralen Datenverarbeitung über die Identifikation des Nummernschilds das für Allradfahrzeuge dieser Art zutreffende Prüfprogramm auf dem Bremsenprufstand aktiviert und durchgeführt.

Es ist selbstverständlich, dass die für den jeweiligen Kraftfahrzeugtyp typischen Angaben, die dann zu unterschiedlichen Prüfvorgängen an den einzelnen Prüfgeräten führen, vor der Prüfung in die Datenverarbeitungsanlage eingegeben worden sind bzw. dort anhand anderer Identifizierungsmittel aktiviert werden.

Die am Prüfgerät ermittelten Messwerte werden automatisch dem richtigen Kraftfahrzeug, dem richtigen Auftrag und der zentralen Datenverarbeitungsanlage übermittelt, damit die Ergebnisse weiterverarbeitet werden können. Sei dies zum Speichern, zum Ausdrucken, zum Erstellen von Prüfprotokollen oder ähnlichen Vorgängen.

Entsprechend einer zweiten Ausführungsform der Erfindung kann das Identifizierungsmerkmal für das Kraftfahrzeug als Kraftfahrzeug-eigenes Kennzeichen ein am Kraftfahrzeug angebrachter Strichcode sein. Dieser Strichcode kann jeweils neu erzeugt werden bei der Fahrzeugannahme und dann auf einen Träger, beispielsweise auf ein flexibles, magnetisches Trägerblatt aufgebracht werden, welches an geeigneter Stelle am Kraftfahrzeug angebracht werden kann. Eine solche geeignete Stelle kann beispielsweise ein Kotflügel sein oder eine Tür, wenn der Strichcode seitlich angebracht werden soll, damit ein geeignetes Lesegerät, insbesondere ein Strichcodelesegerät, ihn einfach lesen kann. Des Weiteren kann der Strichcode unter Umständen auf solchen Trägerblättern schon bereits vorhanden sein und jeweils temporär dem zur Prüfung anstehenden Kraftfahrzeug, unter entsprechender Berücksichtigung in der Datenverarbeitungsanlage, für die bevorstehende Prüfung zugeordnet werden.

In vorteilhafter Weise lassen sich mit Hilfe vorliegender Erfindung die Abläufe in einer Werkstatt bzw. in einer Prüforganisation beschleunigen. Ein Eingriff des Benutzers bzw. Prüfers am Prüfgerät selbst ist nicht mehr notwendig. Der Benutzer bzw. Prüfer muss das Fahrzeug nicht verlassen, um das Prüfgerät bzw. den Prüfstand in die gewünschte Betriebsart zu schalten. Dadurch wird insgesamt der Durchsatz einer Prüforganisation, beispielsweise des TÜV, durch die eingesparte Zeit wesentlich erhöht. Gleichzeitig ist eine Verwechslung des identifizierten Fahrzeugs ausgeschlossen.

Durch die Erfindung ist grundsätzlich erreicht, dass keine Fernbedienung mehr erforderlich ist. Diese könnte jedoch bei Bedarf dazu verwendet werden, um Eingriffe des Prüfers bzw. Benutzers in den Prüfablauf vom Kraftfahrzeug aus zu ermöglichen, falls dies unbedingt erforderlich sein sollte.

## Patentansprüche

1. Anordnung zur Identifizierung von Kraftfahrzeugen bei der Untersuchung in einer Prüfstraße für Kraftfahrzeuge, wobei die Prüfstraße eine Vielzahl von Prufgeräten in einzelnen Prüfstationen enthält, welche an eine Datenverarbeitungsanlage angeschlossen sind, und wobei eine Identifizierung des Kraftfahrzeugs vor, während und nach der Prüfung vorgesehen ist,
dadurch gekennzeichnet, dass
das Kraftfahrzeug temporär zur Identifizierung in der Prüfstraße mit einem Kraftfahrzeug-eigenen Kennzeichen versehen ist, welches zu Beginn der Prüfung dem Kraftfahrzeug zugeordnet wird,
dass dieses Kraftfahrzeug-eigene Kennzeichen in jeder Prüfstation von einer Kamera oder einem anderen geeigneten Erkennungsmittel automatisch gelesen und von der damit verbundenen Datenverarbeitungsanlage identifiziert wird und
dass nach erfolgter Identifizierung die angefahrene Prüfstation automatisch von der Datenverarbeitungsanlage auf das für das entsprechende, identifizierte Kraftfahrzeug vorgesehene Prüfprogramm eingestellt wird und die Prüfstation dieses dann durchführt.

2. Anordnung nach Anspruch 1, dadurch gekennzeichnet, dass als das zur Identifizierung vorgesehene Kraftfahrzeug-eigene Kennzeichen ein am Kraftfahrzeug angebrachter Strichcode oder das amtliche Kennzeichen (Nummernschild) vorgesehen ist.

3. Anordnung nach Anspruch 2, dadurch gekennzeichnet, dass jeder Strichcode vor jeder Prüfung dem Kraftfahrzeug zugeordnet, erstellt und auf einem Träger aufgebracht wird, und dann anschließend an dem betreffenden Kraftfahrzeug angebracht wird.

4. Anordnung nach Anspruch 3, dadurch gekennzeichnet, dass der Strichcode auf einem magnetischen, flexiblen Trägerblatt aufgebracht ist, welches an geeigneter Stelle, insbesondere seitlich an einem Kotflügel oder einer Tür des Kraftfahrzeugs angebracht ist.

5. Anordnung nach Anspruch 1, dadurch gekennzeichnet, dass als Kamera eine elektronische Kamera vorgesehen ist.

6. Anordnung nach Anspruch 1 oder 5, dadurch gekennzeichnet, dass das amtliche Kennzeichen (Nummernschild) softwaremäßig identifiziert und gegebenenfalls mit von früheren Prüfungen her bekanntem amtlichen Kennzeichen überprüft und korreliert wird.

7. Anordnung nach Anspruch 1, dadurch gekennzeichnet, dass ein Strichcodelesegerät zum Lesen und Erkennen des am Kraftfahrzeug angebrachter Strichcodes vorgesehen ist.
